# EUROPEAN PATENT APPLICATION

(11) **EP 1 618 783 A1**
(43) Date of publication of application: **25.01.2006**
(21) Application number: 04727391.7
(22) Date of filing: 14.04.2004
(51) Int. Cl.: A01M 1/00, A01M 1/10

(54) **METHOD OF DETERMINING PRESENCE OR ABSENCE OF BREEDING OF EATING/DAMAGING INSECT AND INSECT CATCHING DEVICE**

(30) Priority: 14.04.2003 JP 2003109351
(71) Applicant: Sapporo Breweries Limited, Tokyo 150-8522 (JP)
(72) Inventor: Kurashima, Masayoshi, c/o SAPPORO BREWERIES LTD., Nitta-gun, Gunma 370-0393 (JP); Shimase, Masayuki, c/o SAPPORO BREWERIES LTD., Nitta-gun, Gunma 370-0393 (JP); Hoki, Takehiro, c/o SAPPORO BREWERIES LTD, Nitta-gun, Gunma 370-0393 (JP); Kishinami, Isao, c/o SAPPORO BREWERIES LTD, Nitta-gun, Gunma 370-0393 (JP)
(74) Representative: Vossius & Partner
(86) International application number: PCT/JP2004/005320
(87) International publication number: WO 2004/091292

(57) **Abstract**

A method for detecting infestation of grain-damaging insects in grain stored in a storage facility. This method comprises a first step of placing an insect trapping device that traps grain-damaging insects in the storage facility and leaving the device in the storage facility for a predetermined length of time, and a second step of detecting infestation of grain-damaging insects in the grain on the basis of how many grain-damaging insects have been trapped in the insect trapping device after the first step. The insect trapping device has a base that is impermeable to water or oil, a porous substrate that is disposed on one side of the base and is capable of holding water or oil, and water or oil held in the porous substrate.

## Description

### Technical Field

The present invention relates to a method for detecting the infestation of grain-damaging insects in grain stored in a storage facility.

### Background Art

Grains such as rice, wheat, barley, soybeans, adzuki beans, millet, and Japanese millet, as well as malts and pulverized forms of these crops (hereinafter referred to collectively as "grains") are sometimes infested with insects that feed on these grains (such as red flour beetles, sitophilus, angoumois grain moths, and so forth; hereinafter referred to as "grain-damaging insects"), and when such infestation has occurred, the grain-damaging insects must be eradicated before the grain is shipped. The only method available in the past for detecting prior to the shipment of grain whether or not the grain had become infested with grain-damaging insects was for a skilled technician to visually examine the grain directly.

### Disclosure of the Invention

With the above conventional detection method, however, for grain stored in bagged form in a storage facility, many random samples had to be visually checked by opening the bags, which entailed considerable time and labor. For grain stored in a silo, the technician had to be lowered into the silo from the entrance located high up on the silo (some 30 meters off the ground, for example), descend to the surface of the heaped grain, and then inspect the grain, which made this work dangerous. Furthermore, with conventional detection methods, the inspection and detection relied upon the experience of the individual technician, so it was difficult to ensure accuracy in detection.

In view of this, it is an object of the present invention to solve the above problems and provide a method with which the question of whether or not grain stored in a storage facility has become infested with grain-damaging insects can be easily and accurately answered, and to provide an insect trapping device that is an effective way to implement this method.

In the course of diligent study aimed at achieving the stated object, the inventors initially focused on utilizing an insect trapping device that would lure and trap insects. However, commercially available insect trapping devices that lure insects with an attractant such as a pheromone and then trap the insects with an adhesive sometimes make use of an attractant or adhesive that contains a chemical substance that is harmful to humans and other living things, and using these in grain storage facilities poses problems in terms of food hygiene. Another problem when an insect trapping device that makes use of an adhesive is used in a grain storage facility is that dust from the grain and so forth sticks to the adhesive, which ends up losing its stickiness and becoming useless in a short time.

As a result of diligent research conducted in light of the above, the inventors arrived at the present invention upon discovering that in a grain storage facility, insects are attracted surprisingly well by water or oil, and will take up living in a porous substrate in which water or oil is held, and therefore a porous substrate that contains water or oil will function adequately as an insect trapping device, and furthermore, there will be no problems with food hygiene or loss of stickiness.

Specifically, the present invention provides a method for detecting infestation of grain-damaging insects in grain stored in a storage facility. The method comprises a first step of placing an insect trapping device that traps grain-damaging insects in the storage facility and leaving the device in the storage facility for a predetermined length of time, and a second step of detecting infestation of grain-damaging insects on the basis of how many grain-damaging insects have been trapped in the insect trapping device after the first step, wherein the insect trapping device has a base that is impermeable to water or oil, a porous substrate that is disposed on one side of the base and is capable of holding water or oil, and water or oil held in the porous substrate.

Also, the present invention provides an insect trapping device for trapping grain-damaging insects that feed on grain. This device comprises a base that is impermeable to water or oil, and a porous substrate that is disposed on one side of the base and is capable of holding water or oil.

Since a storage facility where grain is stored is an extremely dry environment, there is no need whatsoever for any special attractant (such as a pheromone) in order to lure the grain-damaging insects from the grain stored in the storage facility, and the grain-damaging insects can instead be adequately lured, for example, with a porous substrate containing water or an oil. Thus, with the above-mentioned method for detecting infestation of grain-damaging insects, it can be determined whether or not grain-damaging insects have been lured to the water or oil merely by checking the insect trapping device that has been left for a predetermined length of time within the storage facility, so this method entails less work than directly checking the grain, and an accurate determination is possible. Also, once lured in, the grain-damaging insects will take up residence in the porous substrate, so they can be trapped and their presence checked even though they do not become stuck to an adhesive insect trapping device. Thus, using the above-mentioned insect trapping device in a storage facility does not result in any problem with loss of stickiness. Furthermore, since water or oil is used as the attractant, and no adhesive is used, neither is there any problem with food hygiene.

Because it is equipped with a base that is impermeable to water or oil, when the above-mentioned insect trapping device is placed against grain or with a storage bag filled with grain, the water or oil will be prevented from coming into direct contact with the grain. Accordingly, this prevents mold from growing on the grain, and prevents the grain from germinating.

The grain subject to infestation detection is preferably grain that has been put into a storage bag made of woven or nonwoven cloth and that is stored in the storage facility. In the first step it is preferable if the insect trapping device is placed on top of the storage bag, with the other side of the base facing the storage bag, and is left for a predetermined length of time.

When this is done, the water or oil is prevented from coming into direct contact with the grain, so mold is prevented from growing on the grain, and the grain is prevented from germinating. Furthermore, even though the porous substrate is not in direct contact with the grain, the grain-damaging insects living in the grain in the storage bag will find their way through the weave of the bag or through gaps in the sealed portions, and take up residence in the porous substrate of the insect trapping device. Thus, with this method, an infestation of grain-damaging insects can be detected without breaking the seals of the storage bags.

The grain subject to infestation detection is preferably grain that is stored in a silo. In the first step it is preferable if the insect trapping device is placed on top of the grain, with the other side of the base facing the grain, and is left for a predetermined length of time.

When this is done, the insect trapping device may be recovered after being left on the surface of the grain filling the silo. Thus, with this method for detecting infestation of grain-damaging insects, the technician does not need to enter the silo, so no hazardous work is involved.

The following detailed description and the appended drawings will provide an even better understanding of the present invention. These are given merely for the sake of illustration, and should not be construed as limiting the present invention.

### Brief Description of the Drawings

FIG. 1 is a flowchart of the steps of the method for detecting infestation of grain-damaging insects;
FIG. 2 is a schematic oblique view illustrating an example of how the insect trapping device is installed with the method for detecting infestation of grain-damaging insects;
FIG. 3A is a schematic cross section illustrating an example of the installation and recovery of the insect trapping device with the method for detecting infestation of grain-damaging insects, and FIG. 3B is a schematic cross section illustrating an example of how the insect trapping device is installed;
FIG. 4A is an oblique view of the insect trapping device, and FIG. 4B is an exploded view thereof; and
FIG. 5A is a plan view of the main part of the insect trapping device, and FIG. 5B is a cross section along the V-V line in FIG. 5A.

### Best Mode for Carrying Out the Invention

Embodiments of the present invention will now be described in detail with reference to the appended drawings. Elements in the description of the drawings that are the same will be numbered the same, and will not be described more than once. For the sake of simplicity, the dimensional ratios in the drawings do not necessarily coincide with those of the components being described.

Grains to which the present invention can be applied include not only grains in the strict sense, such as rice, wheat, barley, soybeans, adzuki beans, millet, and Japanese, millet, but also malts and pulverized forms of these crops. The term "storage facility" refers to a building or other facility in which grain is stored, examples of which include storage refrigerators and silos. "Grain-damaging insects" refers to insects that feed on grain, examples of which include red flour beetles, sitophilus, and angoumois grain moths.

### First Embodiment

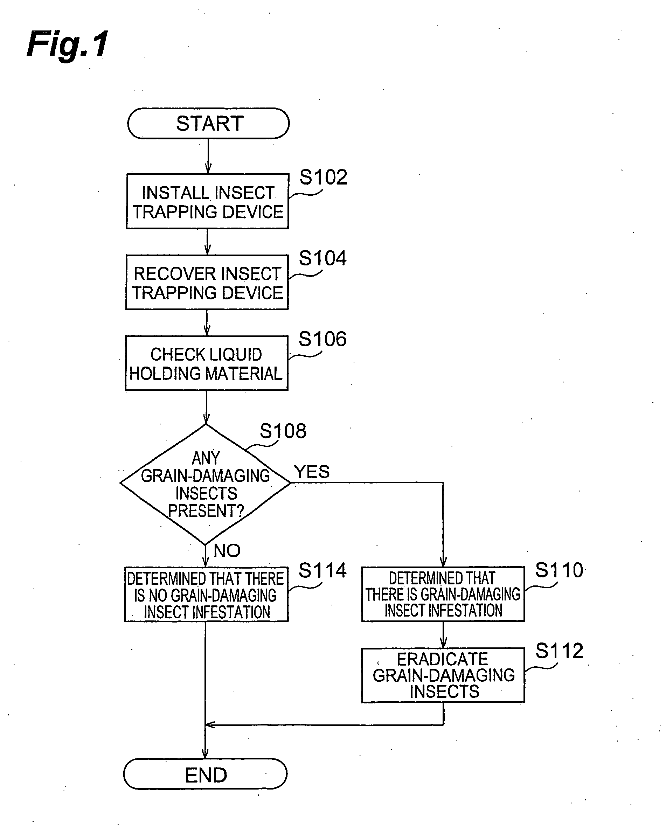

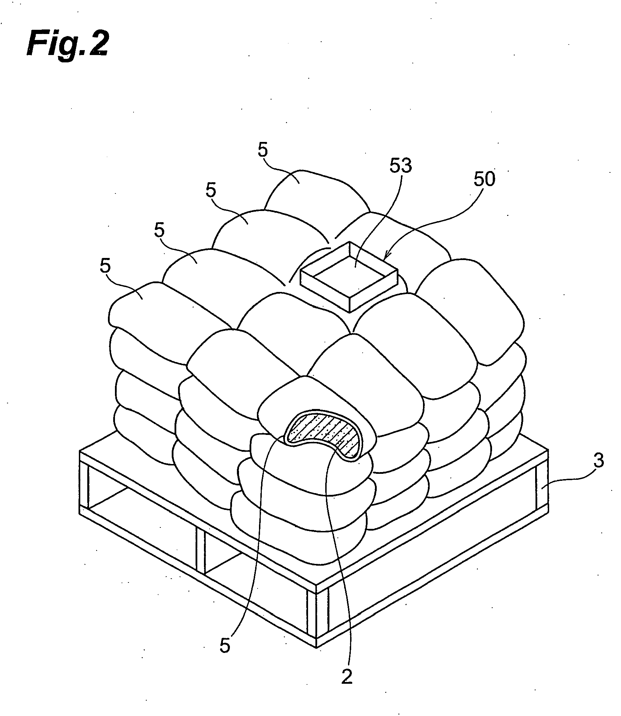

A first embodiment of the present invention will be described through reference to FIGS. 1 and 2. FIG. 1 is a flowchart of the steps involved in the method of the present invention for detecting infestation of grain-damaging insects, and FIG. 2 illustrates an example of how an insect trapping device 50 is installed with the method of this embodiment for detecting infestation of grain-damaging insects. In this embodiment, as shown in FIG. 2, storage bags 5 are filled with the grain 2 to be checked, and the storage bags 5 are stacked on a pallet 3 and stored in a grain storage warehouse (storage facility). The method of this embodiment for detecting infestation of grain-damaging insects is a method for determining whether or not the grain 2 stored in this form has been infested with grain-damaging insects. Examples of the storage bags 5 include bags made of woven cloth (such as linen bags made of knitted linen, and bags made of knitted plastic (such as polyethylene or polypropylene)), and bags made of nonwoven cloth (such as paper bags).

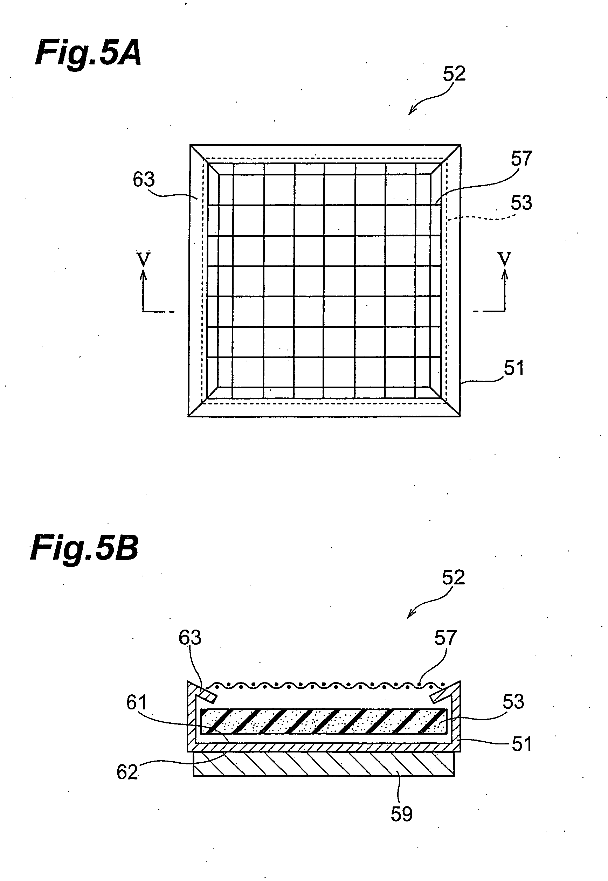

First, in the storage warehouse, the insect trapping device 50 (discussed below) is placed so as to be against the storage bags 5 filled with the grain 2 (see FIG. 2), and is left there for a specific length of time (S102). The insect trapping device 50 has a porous substrate 53 and a base (51 in FIGS. 5A and 5B) that supports the porous substrate 53. The porous substrate 53 is impregnated with water or oil serving as an attractant for grain-damaging insects. The porous substrate 53 is set in the insect trapping device 50 so that it does not directly touch the storage bags 5. The insect trapping device 50 will be described in detail below. The specific length of time is set to be short enough that the porous substrate 53 of the insect trapping device 50 does not completely dry out, such as about one to seven days. The porous substrate 53 may also be impregnated with an aqueous solution produced by dissolving a solute in water. Examples of aqueous solutions that can be used include a glucose aqueous solution, fructose aqueous solution, maltose aqueous solution, sugar aqueous solution, invert sugar aqueous solution, malt extract aqueous solution, malt hot water extract aqueous solution, xylytol aqueous solution, and mannitol aqueous solution. Of these, a xylytol aqueous solution and a mannitol aqueous solution are preferable because they do not readily evaporate, so the porous substrate 53 does not readily dry out and can be left for a longer period of time. Examples of oils that can be used include edible oils and machine oils. A suitable mixture of two or more kinds of the above-mentioned aqueous solutions or oils can also be used. This step S102 corresponds to the above-mentioned first step.

Next, the insect trapping device 50 is recovered (S104) and checked (S106). For example, a visual inspection is made of between the porous substrate 53 and the base 51, the surface of the porous substrate 53, the gaps of the pores in the porous substrate 53, and so forth to determine whether or not there are any grain-damaging insects present (S108). If even one grain-damaging insect is found here, it is determined that the grain 2 on the pallet 3 is infested with grain-damaging insects (S110). This is regardless of whether the discovered grain-damaging insects are alive or dead. If it is determined that there is an infestation of grain-damaging insects, grain-damaging insect eradication work, such as fumigation, is carried out (S 112). If the check in S108 reveals not even a single grain-damaging insect, it is determined that there is no infestation of grain-damaging insects. Steps S106, S108, S110, and S114 correspond to the above-mentioned second step.

With the above method for detecting infestation of grain-damaging insects, if the grain 2 is infested with grain-damaging insects, these grain-damaging insects will be attracted to the water or oil contained in the porous substrate 53 of the insect trapping device 50. The attracted grain-damaging insects will come out of the storage bags 5 through the weave in the bags or gaps in the sealed portions, and find their way to the porous substrate 53. Upon arriving there, the grain-damaging insects will live in or on the porous substrate 53 until the porous substrate 53 completely dries out. Thus, whether or not the grain 2 is infested with grain-damaging insects can be determined by recording the insect trapping device 50 before the porous substrate 53 completely dries out, and checking to see if any insects can be found in the porous substrate 53. Also, since the attracted grain-damaging insects will come out of the storage bags 5 through the weave in the bags or gaps in the sealed portions, infestation of grain-damaging insects can be detected without having to break the seals on the bags.

With the above method for detecting infestation of grain-damaging insects, since water or an oil is used as the attractant, there is no problem with food hygiene, so this method can be favorably employed in food storage facilities. Also, since water or oil that is relatively easy to obtain can be used with the above method for detecting infestation of grain-damaging insects, infestation can be performed easily. Also, the insect trapping device 50 used in the above method for detecting infestation by grain-damaging insects can be used favorably even in grain storage facilities where there is much dust, since, unlike adhesive traps, there is little loss of function due to dust.

Also, with the above method for detecting infestation of grain-damaging insects, the porous substrate 53 is set in the insect trapping device 50, and does not directly touch the storage bags 5. Therefore, the water or oil contained in the porous substrate 53 can be prevented from penetrating the storage bags 5 and touching the grain 2 held in the storage bags 5, which in turn prevents mold from growing on the grain 2, or the grain from germinating.

### Second Embodiment

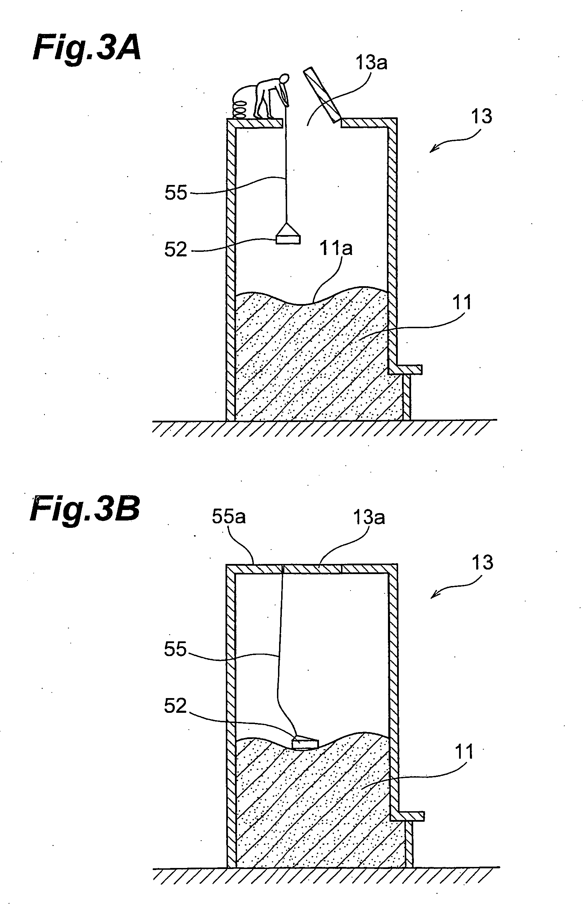

A second embodiment of the present invention will be described through reference to FIGS. 1, 3A, and 3B. In this embodiment, grain 11 is stored in the form of whole grains in a silo 13. The method of this embodiment for detecting infestation of grain-damaging insects is a method for determining whether or not grain stored in the form of whole grains in a silo has been infested with grain-damaging insects.

With the method of this embodiment for detecting infestation of grain-damaging insects, the work is performed according to the flowchart shown in FIG. 1, just as in the first embodiment. This embodiment differs from the first embodiment in the constitution of the insect trapping device 50, the step of installing the insect trapping device 5 0 (S102), and the step of recovering this device (S 104).

The installation of the insect trapping device 50 (S102) and the recovery of the insect trapping device 50 (S104) will be described with reference to FIGS. 3A and 3B. In this embodiment, the insect trapping device 50 has a main portion 52 and a lowering member 55. The main portion 52 is lowered under its own weight by the lowering member 55. Examples of the lowering member 55 include rope, cord, and chain.

First, the main portion 52 of the insect trapping device 50 is lowered into the silo through the silo entrance 13a, until it reaches the surface 11a of the stored grain (see FIG. 3A). One end 55a of the lowering member 55 is fixed near the silo entrance 13a so that it will not fall into the silo. The device is left in this state (see FIG. 3B) for a specific length of time (S102). After the specific length of time has elapsed, the end 55a of the lowering member 55 is pulled, the main portion 52 is hauled up hand over hand, and the main portion 52 is recovered through the silo entrance 13 a (S104).

With the above method for detecting infestation by grain-damaging insects, the insect trapping device 50 having the lowering member 55 is used to place the main portion 52 inside the silo through the silo entrance 13a and by means of the lowering member 55, and the main portion 52 is then recovered through the silo entrance 13a by means of the lowering member 55. Thus, with the above method for detecting infestation of grain-damaging insects, there is no need for the hazardous work of lowering a technician into the silo and down to the surface 11a of the stored grain, which means that the detection work can be performed safely.

Also, with the above method for detecting infestation of grain-damaging insects, since an infestation of grain-damaging insects is detected by observing the insect trapping device 50, no work need be done inside the silo. Also, because no work inside the silo is necessary, and it is possible to determine whether or not there is an infestation of grain-damaging insects merely by seeing if there are any grain-damaging insects in the insect trapping device 50, an accurate determination will be possible even if the person is not a skilled technician.

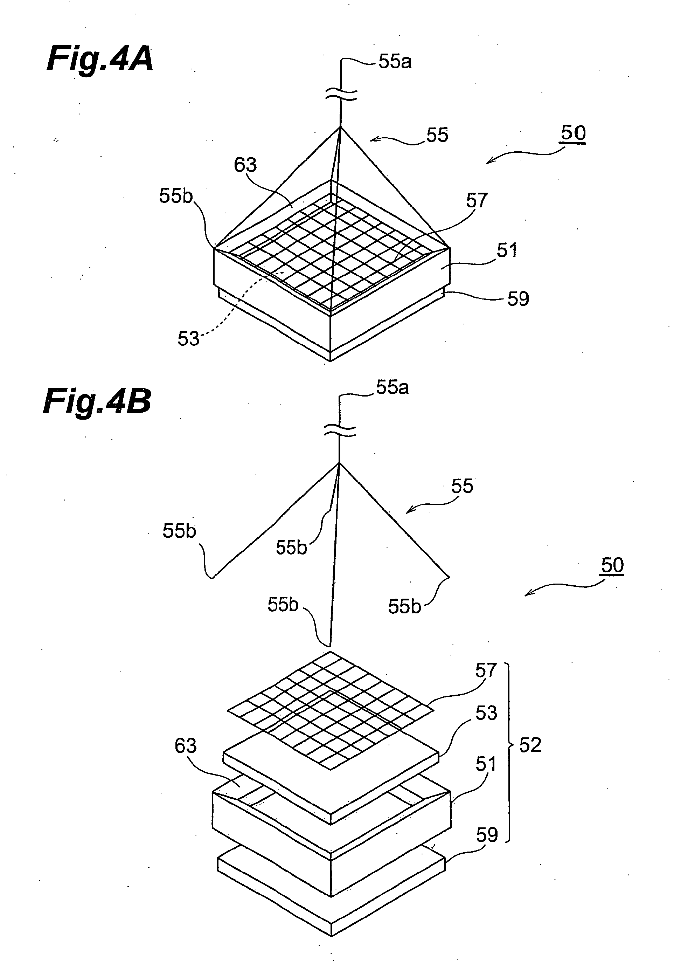

Next, the insect trapping device 50 used in the first and second embodiments given above will be described. FIG. 4A is an oblique view of the insect trapping device 50, and FIG. 4B is an exploded view thereof. The insect trapping device 50 has the main portion 52 and the lowering member 55, and the main portion 52 has the base 51, the porous substrate 53, a mesh member 57, and a weight 59. The lowering member 55 and the weight 59 are not essential with the insect trapping device 50 used in the first embodiment. The insect trapping device 50 in its usage state is placed on the storage bags 5 or the grain 11 so that the face (62 in FIG. 5B) on the opposite side from the mounting face (61 in FIG. 5B) faces the storage bags 5 or the grain 11. Specifically, in the usage state, base 51 is sandwiched between the porous substrate 53 and the storage bags 5 or grain 11.

FIG. 5A is a plan view of the main part 52, and FIG. 5B is a cross section along the V-V line in FIG. 5A. The base 51 consists of a member that is impermeable to water or oil, and is molded in the form of a vessel from a substantially square sheet. The porous substrate 53 can be removably mounted to the mounting face 61 provided in the interior space of the base 51. The peripheral edge of the base 51 is provided with a bent-over portion 63 so that the porous substrate 53 can be accommodated more easily. The bent-over portion 63 is angled toward the interior space of the base so that trapped insects cannot readily climb back out. The dimensions of the base 51 are, for example, 235 mm long, 235 mm wide, and 15 mm deep.

The porous substrate 53 is housed in the interior space of the base 51, and mounted on the mounting face 61. The porous substrate 53 is impregnated with water or oil, and is able to retain this impregnating water or oil. A porous material (such as a sponge), woven cloth (such as cotton cloth), nonwoven cloth, or the like can be used as the porous substrate 53. The porous substrate 53 has substantially the same dimensions as the base 51, and is formed in a substantially square shape, for example.

The mesh member 57 is detachably fixed to the mounting face 61 side of the base 51. The porous substrate 53 is mounted at a location that is in between the mounting face 61 and the mesh member 57, and the mesh member 57 is mounted so as to cover the porous substrate 53. A metal, plastic, or the like can be used as the material of the mesh member 57. There are no particular restrictions on the size of the mesh openings, but the size is selected so that the porous substrate 53 can be prevented from falling out of the base 51, while grain-damaging insects can go through the mesh and reach the porous substrate 53.

The weight 59 is provided to the face 62 on the opposite side from the mounting face 61 of the base 51. The weight 59 is heavier than the base 51. As a result, the insect trapping device 50 can be placed stably on the surface 11a of grain, and can be stably positioned with the mounting face 61 facing upward. The weight 59 has substantially the same dimensions as the base 51, and is substantially square in shape, for example.

Let us once again refer to FIGS. 4A and 4B. One end 55b of the lowering member 55 is split in four and connected to the base 51, allowing the main portion 52 to be lowered at the corners of the base 51. The other end 55a of the lowering member 55 is a free end. The lowering member 55 must be long enough for the main portion to be lowered through the silo entrance 13 a and reach the surface 11a of the grain 11 stored in the silo. Specifically, the length of the lowering. member 55 must at least be the same as the height of the silo 13.

With the insect trapping device 50 described above, the porous substrate 53 is housed on the mounting face 61 in the interior space of the base 51. Thus, the face 62 on the opposite side from the mounting face 61 faces the storage bags 5 or grain 11, so there is no direct contact between the porous substrate 53 and the storage bags 5 or grain 11. Therefore, the grain 11 or the grain 2 in the storage bags 5 is prevented from touching the water or oil that impregnates the porous substrate 53, so there is no mold grown or grain germination.

The present invention is not limited to the embodiments given above, and various modifications are possible. For instance, in the first and second embodiments given above, water or oil impregnating the porous substrate 53 was used as an attractant for grain-damaging insects, but malt flour, barley flour, wheat flour, rice flour, starch, or another such pulverized substance may be used as an attractant along with oil or water. When one of these pulverized substances is used, it is sprinkled over the porous substrate 53 after the porous substrate 53 has been wetted with water so that the pulverized substance itself will absorb the water.

### Working Examples

The present invention will now be described in more specific terms through working examples, but is not limited to the following working examples.

The number of grain-damaging insects trapped in a grain storage warehouse using water, malt extract, glucose, cooking oil, and starch as attractants was counted, and Table 1 shows the relationship between the trapped insect count and the attractant. The grain used for this test was barley stored in a silo, which had been stored for two years under ordinary conditions. The grain-damaging insects were trapped using an insect trapping device having the constitution of the embodiment given above and shown in FIGS. 4A and 4B and FIGS. 5A and 5B. The dimensions of the base of the insect trapping device used here were 235 mm long, 235 mm wide, and 15 mm deep. The porous substrate was a piece of cotton cloth measuring 220 mm long, 220 mm wide, and 5 mm thick. The insect trapping device was left in place for a period of 3 days. Cotton cloth impregnated with water, various aqueous solutions, or oil, each in an amount of 200 mL as shown in Table 1, was placed in the insect trapping device. With the starch, a suspension was prepared by mixing with water in a concentration of 10%, and 200 mL of this was sprayed over the cotton cloth. For the sake of comparison, Table 1 also shows the results obtained when insects were trapped by placing just a dry piece of cotton cloth in the insect trapping device. The grain-damaging insect count was the combined total of red flour beetles, sitophilus, and angoumois grain moths trapped in the insect trapping device.

**Table 1 - Change in grain-damaging insect count with different attractants**

| Attractant | Trapped insect count |
|---|---|
| Nonwoven cloth alone | 3 |
| Water | 1034 |
| Malt extract aqueous solution (10% conc.) | 1055 |
| Glucose aqueous solution (10% conc.) | 1048 |
| Cooking oil | 1003 |
| Starch | 1021 |

The above results confirm that an insect trapping device in which water, malt extract, glucose extract, cooking oil, or starch is used as an attractant has an attractive power that is clearly stronger than that of an insect trapping device in which a dry cotton cloth was used. It can also be seen that even water attracts insects well, with no significant difference from the other attractants, which confirms that just water or an oil need be contained as an attractant that will attract grain-damaging insects.

It is clear from the above description of the present invention that the present invention is capable of various modifications. Such modifications cannot be considered to be outside the spirit and scope of the present invention, and all improvements that would be self-evident to a person skilled in the art are encompassed in the claims given below.

### Industrial Applicability

The present invention provides a method with which the question of whether or not grain stored in a storage facility has become infested with grain-damaging insects can be easily and accurately answered, and to provide an insect trapping device that is an effective way to implement this method.

## Claims

1. A method for detecting infestation of grain-damaging insects in grain stored in a storage facility, the method comprising:
a first step of placing an insect trapping device that traps grain-damaging insects in the storage facility and leaving the device in the storage facility for a predetermined length of time; and
a second step of detecting infestation of grain-damaging insects in the grain on the basis of how many grain-damaging insects have been trapped in the insect trapping device after the first step, wherein
the insect trapping device has:
a base that is impermeable to water or oil;
a porous substrate that is disposed on one side of the base and is capable of holding water or oil; and
water or oil held in the porous substrate.

2. The method for detecting infestation of grain-damaging insects according to Claim 1, wherein
the grain subject to infestation detection is grain that has been put into a storage bag made of woven or nonwoven cloth, and that is stored in the storage facility, and
in the first step, the insect trapping device is placed on top of the storage bag, with the other side of the base facing the storage bag, and is left for a predetermined length of time.

3. The method for detecting infestation of grain-damaging insects according to Claim 1, wherein
the grain subject to infestation detection is grain that is stored in a silo, and
in the first step, the insect trapping device is placed on top of the grain, with the other side of the base facing the grain, and is left for a predetermined length of time.

4. An insect trapping device for trapping grain-damaging insects that feed on grain, comprising:
a base that is impermeable to water or oil; and
a porous substrate that is disposed on one side of the base and is capable of holding water or oil.
